# FASCICULE DE BREVET EUROPEEN

(11) **EP 0 499 546 B1**
(45) Date de publication et mention de la délivrance du brevet: **10.05.1995**
(21) Numéro de dépôt: 92400391.6
(22) Date de dépôt: 13.02.1992
(51) Int. Cl.: B01D 57/02, G01N 27/447

(54) **Procédé de fabrication d'une plaque de gel pour la séparation et le transfert de macromolécules par électrophorèse, et les plaques de gel ainsi obtenues**
Verfahren zur Herstellung einer Gelscheibe für die Trennung und den Tranfer von Makromolekülen durch Elektrophorese und auf diese Weise hergestellte Gelscheiben
Process for making a gel slab for the separation and the transfer of macromolecules by electrophoresis, and gel slabs thus obtained

(30) Priorité: 14.02.1991 FR 9101734
(43) Date de publication de la demande: 19.08.1992
(73) Titulaire: BERTIN & CIE, F-78373 Plaisir Cédex (FR)
(72) Inventeur: Boquet, Jean, F-78610 Le Perray-En-Yvelines (FR)
(74) Mandataire: Ramey, Daniel

(56) Documents cités:
- EP-A- 0 196 790
- WO-A-87/02132
- DE-A- 3 032 070

## Description

L'invention concerne un procédé de fabrication d'une plaque de gel pour la séparation et le transfert de macromolécules par électrophorèse, ainsi que les plaques de gel qui sont obtenues par exécution de ce procédé.

Ces plaques comprennent une couche de gel, par exemple d'agarose ou de polyacrylamide, adhérant à une face d'une membrane microporeuse de faible épaisseur, par exemple de nitrocellulose, de "nylon", de PVDF (difluorure de polyvinylidène) ou encore de papier spécial. Des échantillons de macromolécules telles que des acides nucléiques ou des protéines, sont déposés dans des puits formés dans la couche de gel à une extrémité de la plaque, puis cette plaque est placée dans un bain de liquide approprié entre des électrodes de polarités opposées. Sous l'effet du champ électrique entre les électrodes, les macromolécules se déplacent longitudinalement dans la couche de gel à des vitesses qui sont fonction de leur masse moléculaire. Au bout d'un temps donné, elles ont parcouru des distances ou longueurs différentes en fonction de leur masse moléculaire et peuvent ainsi être séparées les unes des autres. Elles sont ensuite transférées dans l'épaisseur du gel sur la membrane adhérant à la plaque de gel, en vue de leur hybridation et de leur détection ultérieures.

Les plaques de gel utilisées dans cette technique connue de séparation et de transfert de macromolécules (dite "Multi-Blotter") doivent satisfaire à un certain nombre de critères, tels que la planéité de la membrane, la constance de l'épaisseur du gel, l'homogénéité du gel, l'absence de bulles d'air dans le gel et à l'interface gel-membrane, et la propreté de la face libre de la membrane opposée à celle qui est recouverte de gel.

Pour la fabrication de ces plaques, on peut fixer les membranes à leur périphérie sur des cadres, puis couler dans ces cadres le gel à l'état très liquide de façon à recouvrir les membranes. On laisse ensuite solidifier le gel. De par sa nature, le gel adhère assez fortement aux membranes et a tendance à remplir les micropores des membranes, par capillarité.

Lorsque les membranes sont posées sur une surface plane pour la coulée du gel, on obtient des plaques dont les membranes sont planes, mais qui présentent des traces ou une épaisseur plus ou moins variable de gel sur leur face opposée à celle qui est normalement recouverte de gel. En effet, lors de la coulée, le gel très liquide pénètre dans les membranes et les traverse pour venir sur la surface de support, où il s'accumule de façon plus ou moins importante. De plus, des bulles d'air restent souvent emprisonnées entre la membrane et le gel ou dans le gel.

Si, au contraire, seuls les cadres périphériques auxquels sont fixées les membranes sont posés sur un support pour la coulée du gel, les membranes elles-mêmes n'étant pas supportées par une surface plane, leur face libre reste propre, mais les membranes s'incurvent sous le poids du gel et prennent une forme bombée qu'elles conservent lorsque le gel s'est solidifié.

Pour éviter ces inconvénients, on a déjà proposé de saturer les membranes d'eau avant la coulée du gel, puis de les poser sur une surface plane et de les soumettre à un roulage afin d'en éliminer les bulles d'air et de faire adhérer les membranes à la surface plane. On coule ensuite le gel sur les membranes posées sur cette surface plane. L'eau présente dans les micropores des membranes empêche le gel de traverser les membranes et préserve ainsi la propreté de la face des membranes opposée à celle recouverte de gel.

Toutefois, ce procédé connu est très long et fastidieux à exécuter, et ne permet pas une fabrication rapide des plaques de gel.

Dans WO-A-87/02132 est décrit un procédé consistant à couler un gel à l'état liquide sur une membrane de transfer poreuse, supportée elle-même par la surface plane d'un support poreux.

EP-A-196 790 (pages 19-20) décrit un procédé consistant à couler un gel à l'état liquide sur une membrane poreuse tendue et supportée par un corps solide, puis à placer une seconde membrane pré-tendue sur le gel.

La présente invention a notamment pour but d'éviter ces divers inconvénients des procédés connus de la technique antérieure.

Elle a pour objet un procédé de fabrication de plaques de gel, qui permette de satisfaire aux critères précités et qui soit simple et rapide à exécuter.

L'invention a également pour objet des plaques de gel du type précité, qui soient d'une qualité parfaite et identiques entre elles.

Elle propose, à cet effet, un procédé de fabrication d'une plaque de gel pour la séparation et le transfert de macromolécules par électrophorèse, cette plaque comprenant une couche de gel d'épaisseur constante adhérant à une face d'une membrane microporeuse, le procédé consistant à fixer la périphérie de la membrane sur un cadre, à couler le gel à l'état liquide dans le cadre et à le laisser solidifier, caractérisé en ce qu'il consiste, lors de la coulée du gel dans le cadre, à supporter la membrane par un fluide ou par le gel à l'état liquide, en évitant tout contact solide avec la face libre de la membrane opposée à celle recevant le gel, de façon à ne pas modifier ou perturber sur cette face libre les forces de tension superficielle entre la membrane et le gel remplissant les micropores de la membrane et à assurer simultanément la planéité de la membrane jusqu'à solidification du gel.

L'invention repose sur la constatation que le gel, qui est versé sur une face d'une membrane et qui imprègne cette membrane dans toute son épaisseur, ne s'écoule pas à l'extérieur de la membrane lorsque la face libre de celle-ci n'est pas touchée par un objet solide. Les forces de tension superficielle assurant l'adhérence entre le gel et la membrane sont en effet suffisantes pour empêcher le gel de sourdre sur la face libre de la membrane. Cette face libre qui est opposée à celle recouverte de gel, reste ainsi parfaitement propre.

Dans un premier mode de réalisation de l'invention, ce procédé consiste à poser à l'envers sur une surface plane horizontale, le cadre portant la membrane, celle-ci se trouvant alors sur le dessus du cadre et à distance de ladite surface plane, et à couler le gel liquide sous la membrane à l'intérieur du cadre jusqu'à ce que la surface libre du gel atteigne un niveau prédéterminé où le gel est en contact avec la face inférieure de la membrane et la supporte dans un plan horizontal.

Dans ces conditions, c'est le gel qui supporte la membrane et assure sa planéité.

Le niveau précité atteint par le gel est déterminé avantageusement par un orifice de trop-plein, formé par exemple dans des moyens d'amenée du gel à l'intérieur du cadre.

On peut ainsi régler de façon précise la position de ce niveau, correspondant à une bonne planéité de la membrane.

Selon un autre mode de réalisation, le procédé selon l'invention consiste à supporter la membrane par un coussin d'air à champ de pression uniforme agissant sur la face libre de la membrane et à couler le gel liquide sur la membrane à l'intérieur du cadre. Le champ de pression du coussin d'air est réglé de façon à supporter le poids de la membrane, celui du cadre et celui du gel coulé dans le cadre sur la membrane. L'uniformité de ce champ de pression assure une excellente planéité de la membrane. Le coussin d'air précité peut être produit au moyen d'une table fluidisée à paroi supérieure poreuse ou micro perforée, alimentée par un débit d'air sous pression.

L'invention propose également une plaque de gel pour la séparation et le transfert de macromolécules par électrophorèse, comprenant une couche de gel d'épaisseur constante adhérant à une face d'une membrane microporeuse plane, caractérisée en ce que le gel remplit les micropores de la membrane sans déborder sur la face libre de la membrane opposée à celle recouverte de gel.

Selon une autre caractéristique de l'invention, le gel forme des ménisques concaves dans les pores débouchant sur cette face libre de la membrane.

De telles plaques de gel ont des caractéristiques identiques d'épaisseur de gel, de planéité de la membrane, d'imprégnation de la membrane par le gel et permettent de réaliser des séparations et des transferts reproductibles et fiables de macromolécules.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
la figure 1 illustre schématiquement un premier mode de réalisation de l'invention;
la figure 2 illustre schématiquement un second mode de réalisation de l'invention;
la figure 3 est une vue très schématique à grande échelle, de la face libre d'une membrane dont les micropores sont remplis de gel.

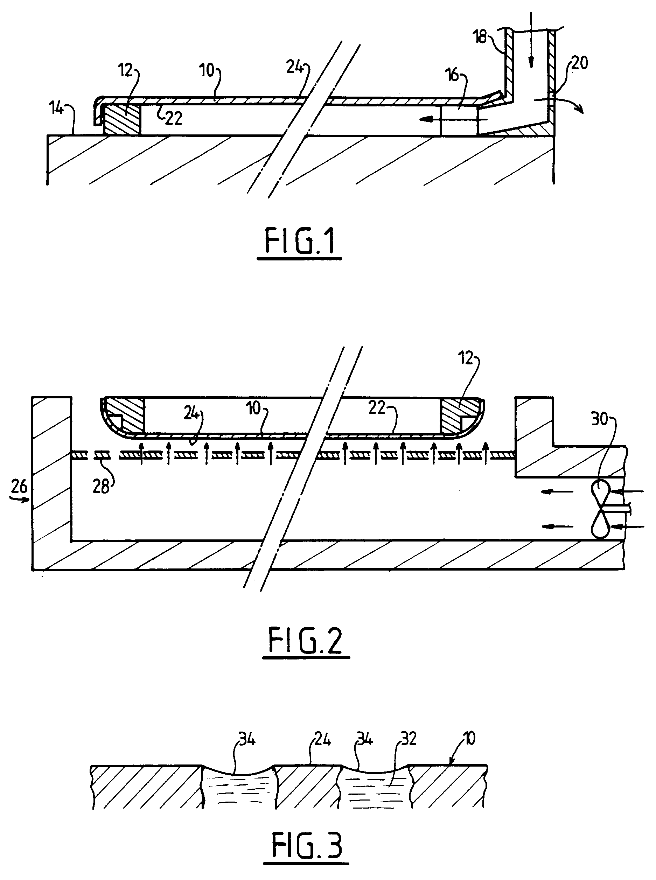

On se réfère d'abord à la figure 1, illustrant un premier mode de réalisation de l'invention.

Dans cette figure, une membrane microporeuse 10, par exemple de nitrocellulose, de "nylon", de PVDF ou de papier spécial, est fixée à sa périphérie sur un cadre 12 ayant une hauteur égale à l'épaisseur de la couche de gel que l'on veut former sur la membrane 10. Le cadre est posé à l'envers sur une table de support 14 à surface supérieure parfaitement plane, de telle sorte que la membrane 10 se trouve sur le dessus du cadre et à une distance de la table 14 correspondant à l'épaisseur du cadre.

La membrane a une épaisseur de 0,1 à 0,2 mm par exemple, ses pores pouvant avoir une dimension moyenne d'environ 0,5 »m. La couche de gel à former sur la membrane a une épaisseur de quelques mm par exemple.

Le cadre 12, de forme par exemple rectangulaire, est à contour continu, sauf en une zone 16 associée à un conduit extérieur 18 d'amenée de gel liquide. L'extrémité inférieure du conduit 18 est raccordée de façon sensiblement étanche à l'ouverture 16 du cadre 12, tandis que son extrémité supérieure est reliée à des moyens d'alimentation en gel.

Une paroi du conduit 12 comporte un orifice 20 de trop-plein, dont le bord inférieur est à un niveau correspondant exactement à celui qui est souhaité pour la face inférieure 22 de la membrane qui doit être recouverte de gel.

Le procédé selon l'invention est des plus simples à mettre en oeuvre.

Il suffit de poser le cadre 12 portant la membrane 10 sur la table 14 de la façon représentée en figure 1, de raccorder son ouverture 16 à l'extrémité inférieure du conduit 18 et de couler le gel, liquéfié par exemple par chauffage à une température de l'ordre de 55°C (quand il s'agit d'agarose) dans le conduit 18. Le gel, très liquide à cette température, remplit alors le cadre 12, sa surface libre montant progressivement à l'intérieur de ce cadre jusqu'à venir au contact de la face inférieure 22 de la membrane et à supporter celle-ci dans un plan parfaitement horizontal. Dès que le gel a atteint ce niveau à l'intérieur du cadre 12, l'excédent de gel amené par le conduit 18 s'écoule à l'extérieur par l'orifice de trop-plein 20. Simultanément, le gel imprègne la membrane 10 et remplit par capillarité les micropores de celle-ci.

La planéité de la membrane correspond à la planéité de la surface libre du gel à l'intérieur du cadre 12 et est parfaite.

Le positionnement correct de l'orifice de trop-plein 20 permet d'éviter que la membrane soit légèrement incurvée, de façon convexe ou concave et que le gel traverse la membrane pour venir déborder sur la face supérieure 24 de celle-ci.

Par ailleurs, les bulles d'air susceptibles d'être emprisonnées sous la membrane sont chassées à l'extérieur de celle-ci au fur et à mesure que le gel remplit par capillarité les micropores de la membrane.

Eventuellement, au début de la coulée du gel, à l'intérieur du cadre, on peut incliner la table 14, de telle sorte que le conduit 18 se trouve au point le plus haut de celle-ci, ce qui permet de dégazer le gel amené dans le cadre 12 en laissant s'échapper les bulles d'air vers le haut par le conduit 18.

On a représenté en figure 2 une variante de l'invention.

Dans cette variante, on utilise un coussin d'air à champ de pression uniforme pour supporter la membrane 10 fixée à sa périphérie sur le cadre 12, celui-ci étant alors disposé de telle sorte que la membrane 10 se trouve sous le cadre.

Le coussin d'air de sustentation est produit par une table fluidisée 26 d'un type classique, dont la paroi supérieure 28 à face supérieure parfaitement horizontale et plane est poreuse ou microperforée pour laisser sortir l'air vers le haut comme indiqué par les flèches. Cette table est alimentée par une soufflante représentée schématiquement en 30, fournissant un flux d'air à débit et pression prédéterminés. Les pertes de charge importantes de l'air à la traversée de la paroi 28 assurent une uniformité de la pression s'exerçant sur la face libre 24 de la membrane opposée à la face 22 qui doit recevoir le gel.

La paroi 28 est par exemple en matériau fritté, tel que du bronze ou un matériau composite à base de fibres de verre.

Lorsque la table 26 est alimentée en air par la soufflante 30, la membrane et son cadre peuvent être disposés au dessus de la surface 28 et sont alors supportés de façon stable par le coussin d'air qui se forme entre la membrane 10 et la surface 28. On coule ensuite le gel liquide à l'intérieur du cadre 12, jusqu'à ce que la couche de gel ait l'épaisseur voulue (qui peut être celle du cadre 12). Le gel imprègne la membrane 10, mais ne sort pas sur la face inférieure 24 de celle-ci et reste à l'intérieur des micropores de la membrane.

On peut arrêter l'alimentation de la table 26 en air dès que le gel imprégnant la membrane 10 s'est solidifié.

Comme dans le mode de réalisation précédent, on obtient des plaques de gel dont les membranes sont parfaitement planes, et dans lesquelles l'épaisseur de la couche de gel est constante. Le gel imprégnant la membrane a chassé l'air contenu dans les micropores de celle-ci.

Les plaques de gel fabriquées selon l'invention présentent dans la majorité des cas la caractéristique suivante, illustrée schématiquement en figure 3: le gel 32 remplit les micropores de la membrane et forme, au débouché de ces micropores sur la face 24 de la membrane opposée à la face recouverte de gel, des ménisques concaves 34 en raison des forces de tension superficielle entre le gel et la matière de la membrane.

## Revendications

1. Procédé de fabrication d'une plaque de gel pour la séparation et le transfert de macromolécules par électrophorèse, cette plaque comprenant une couche de gel d'épaisseur constante adhérant à une face d'une membrane microporeuse, le procédé consistant à fixer la périphérie de la membrane (10) sur un cadre (12), à couler le gel à l'état liquide dans le cadre et à le laisser solidifier, caractérisé en ce qu'il consiste, lors de la coulée du gel dans le cadre, à supporter la membrane par un fluide ou par le gel à l'état liquide, en évitant tout contact solide avec la face libre (24) de la membrane opposée à celle (22) recevant le gel, de façon à ne pas modifier ou perturber sur cette face libre les forces de tension superficielles entre la membrane et le gel remplissant les micropores de la membrane et à assurer simultanément la planéité de la membrane jusqu'à solidification du gel.

2. Procédé selon la revendication 1, caractérisé en ce qu'il consiste à poser à l'envers, sur une surface plane horizontale (14), le cadre (12) portant la membrane (10), celle-ci se trouvant alors sur le dessus du cadre et à distance de ladite surface plane (14), et à couler le gel à l'état liquide sous la membrane à l'intérieur du cadre.

3. Procédé selon la revendication 2, caractérisé en ce qu'il consiste à poursuivre la coulée du gel sous la membrane (10) jusqu'à ce que la surface libre du gel atteigne un niveau prédéterminé où le gel est en contact avec la face inférieure (22) de la membrane et la supporte dans un plan horizontal.

4. Procédé selon la revendication 3, caractérisé en ce que le niveau précité est déterminé par un orifice de trop plein (20) formé par exemple dans des moyens (18) d'amenée du gel à l'intérieur du cadre (12).

5. Procédé selon la revendication 1, caractérisé en ce qu'il consiste à supporter la membrane et son cadre par un coussin d'air à champ de pression uniforme agissant sur la face libre de la membrane et à couler le gel liquide sur la membrane à l'intérieur du cadre (12).

6. Procédé selon la revendication 5, caractérisé en ce qu'il consiste à produire le coussin d'air au moyen d'une table fluidisée (26) à paroi supérieure poreuse ou microperforée (28) ayant une face supérieure plane et horizontale, alimentée par un débit d'air sous pression.

7. Plaque de gel pour la séparation et le transfert de macromolécules par électrophorèse, comprenant une couche de gel d'épaisseur constante adhérant à une face d'une membrane microporeuse plane (24), caractérisée en ce que le gel remplit les micropores de la membrane sans déborder sur la face libre (24) de la membrane opposée à celle (22) recouverte de gel.

8. Plaque de gel selon la revendication 7, caractérisée en ce que le gel (32) forme des ménisques concaves (34) dans les pores débouchant sur ladite face libre (24) de la membrane.

## Claims

1. A method of manufacturing a plate of gel for separating and transferring macromolecules by electrophoresis, said plate comprising a layer of gel of constant thickness adhering to a face of a microporous membrane, the method consisting in fixing the periphery of the membrane (10) to a frame (12), in casting the gel while in the liquid state into the frame, and in allowing it to set, the method being characterized in that it consists, while casting the gel into the frame, in supporting the membrane by a fluid or by the gel in the liquid state and avoiding any solid contact with the free face (24) of the membrane opposite from its face (22) that receives the gel, thereby not changing or disturbing the surface tension forces on said free face between the membrane and the gel filling the micropores of the membrane, and simultaneously ensuring planeness for the membrane until the gel sets.

2. A method according to claim 1, characterized in that it consists in placing the frame (12) carrying the membrane (10) upsidedown on a horizontal plane surface (14) such that the membrane is then on top of the frame and at a distance from said plane surface (14), and in casting the gel in the liquid state beneath the membrane, inside the frame.

3. A method according to claim 2, characterized in that it consists in continuing to cast the gel beneath the membrane (10) until the free surface of the gel reaches a predetermined level where the gel is in contact with the bottom face (22) of the membrane and supports it in a horizontal plane.

4. A method according to claim 3, characterized in that the above-specified level is determined by an overflow orifice (20) formed, for example, in means (18) for delivering the gel to the inside of the frame (12).

5. A method according to claim 1, characterized in that it consists in supporting the membrane and its frame by a cushion of air having a uniform pressure field acting against the free face of the membrane, and in casting the liquid gel onto the membrane, inside the frame (12).

6. A method according to claim 5, characterized in that it consists in producing the cushion of air by means of a fluidized slab (26) having a porous or micro-perforated top wall (28) with a top face that is plane and horizontal, the slab being fed with a flow of air under pressure.

7. A plate of gel for separating and transferring macromolecules by electrophoresis, the plate comprising a layer of gel of constant thickness adhering to a face of a plane microporous membrane (24), and being characterized in that the gel fills the micropores of the membrane without overflowing onto the free face (24) of the membrane opposite from its face (22) covered in gel.

8. A plate of gel according to claim 7, characterized in that the gel (32) forms meniscuses (34) that are concave in the pores that open out to said free face (24) of the membrane.

## Patentansprüche

1. Verfahren zur Herstellung einer Gelplatte zum Trennen und Überführen von Makromolekülen mittels Elektrophorese, wobei diese Platte eine Gelschicht mit gleichbleibender Dicke aufweist, die an einer Seite einer mikroporösen Membran anhaftet und das Verfahren ein Befestigen des Randes der Membran (10) in einem Rahmen (12), ein Ausgießen des flüssigen Gels in den Rahmen und ein Erstarren desselben umfaßt, **dadurch gekennzeichnet, daß** die Membran bei dem Ausgießen des Gels in den Rahmen mittels eines Fluidums oder durch das flüssige Gel gehalten wird, wobei jeder Kontakt zu der freien Fläche (24) der Membran, die der das Gel aufnehmenden Fläche (22) gegenüber liegt, in der Weise vermieden wird, daß auf dieser freien Fläche keine Veränderung oder Störung der Oberflächenspannungen zwischen der Membran und dem die Mikroporen der Membran füllenden Gel auftreten, und sichergestellt wird, daß die Membran bis zum Erstarren des Gels eben bleibt.

2. Verfahren nach Anspruch 1, **dadurch gekennzeichnet, daß** der die Membran (10) haltende Rahmen (12) umgedreht auf einer horizontalen ebenen Fläche (14) angeordnet wird und sich die Membran über der Unterseite des Rahmens in einem Abstand von der ebenen Fläche (14) befindet, wobei das flüssige Gel unter die Membran in das Innere des Rahmens gegossen wird.

3. Verfahren nach Anspruch 2, **dadurch gekennzeichnet, daß** das Ausgießen des Gels unter die Membran (10) solange erfolgt, bis die freie Fläche des Gels eine vorbestimmte Höhe erreicht, bei welcher das Gel mit der Unterseite (22) der Membran in Kontakt steht und diese in einer Horizontalebene hält.

4. Verfahren nach Anspruch 3, **dadurch gekennzeichnet, daß** die genannte Höhe durch einen Überlauf (20) bestimmt wird, welcher beispielsweise in Mitteln (18) zur Zuführung des Gels in das Innere des Rahmens (12) ausgebildet ist.

5. Verfahren nach Anspruch 1, **dadurch gekennzeichnet, daß** die Membran und ihr Rahmen mittels eines Luftpolsters mit gleichmäßigem Druck gehalten werden, welcher an der freien Fläche der Membran wirkt, und daß das flüssige Gel oberhalb der Membran in das Innere des Rahmens (12) gegossen wird.

6. Verfahren nach Anspruch 5, **dadurch gekennzeichnet, daß** der Luftpolster mittels eines durchströmten Tisches (26) mit einer porösen oder feinperforierten Oberseite (28) hergestellt wird, welche Oberseite eine horizontale und ebene Oberfläche besitzt, die mit Druckluft beaufschlagt ist.

7. Gelplatte zum Trennen und Überführen von Makromolekülen mittels Elektrophorese, die eine Gelschicht mit gleichbleibender Dicke aufweist, welche an einer Seite (22) einer mikroporösen ebenen Membran anhaftet, **dadurch gekennzeichnet, daß** das Gel die Mikroporen der Membran füllt ohne über die freie Fläche (24) der Membran, die der mit dem Gel bedeckten Seite (22) gegenüber liegt, hinauszuragen.

8. Gelplatte nach Anspruch 7, **dadurch gekennzeichnet, daß** das Gel (32) in den Poren, die zur freien Fläche (24) der Membran führen, konkave Eintiefungen (34) bildet.
